(19) Europäisches Patentamt
European Patent Office
Office européen des brevets

(11) **EP 4 206 794 A1**

(12) **EUROPEAN PATENT APPLICATION**
published in accordance with Art. 153(4) EPC

(43) Date of publication:
**05.07.2023 Bulletin 2023/27**

(21) Application number: **21861437.8**

(22) Date of filing: **20.08.2021**

(51) International Patent Classification (IPC):
**G02B 30/56** (2020.01)     **H04N 13/302** (2018.01)

(52) Cooperative Patent Classification (CPC):
**G02B 30/56; H04N 13/302**

(86) International application number:
**PCT/JP2021/030618**

(87) International publication number:
**WO 2022/045010 (03.03.2022 Gazette 2022/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.08.2020 JP 2020144508**

(71) Applicant: **TOPPAN INC.**
**Tokyo 110-0016 (JP)**

(72) Inventor: **DAIKU, Yasuhiro**
**Tokyo 110-0016 (JP)**

(74) Representative: **TBK**
**Bavariaring 4-6**
**80336 München (DE)**

(54) **MID-AIR DISPLAY DEVICE**

(57)     An aerial display apparatus includes: a display device (11) configured to display an image; an optical device (12) configured to allow light from the display device (11) to be transmitted therethrough, and configured of a transparent material; and a mirror device (13) configured to reflect light from the optical device (12) and display an image in an aerial space on a side opposite to the optical device (12). The optical device (12) includes a first optical member (12A) having a first thickness and a second optical member (12B) having a second thickness greater than the first thickness.

FIG. 2

**Description**

FIELD

The present invention relates to an aerial display apparatus which displays an image in the air.

BACKGROUND

An aerial display apparatus capable of displaying an image, a moving image, etc. as an aerial image has been studied and is expected to be a new human-machine interface. The aerial display apparatus reflects light emitted from a display surface of a display device and displays an image, etc. in the air using, for example, a dihedral corner reflector array in which dihedral corner reflectors are arranged in an array. In the display method using the dihedral corner reflector array, aberration does not occur, and an image, etc. is displayed at a plane-symmetrical position.

CITATION LIST

PATENT LITERATURE

Patent Document 1: Jpn. Pat. Appln. KOKAI Publication No. 2017-67933

SUMMARY

TECHNICAL PROBLEM

The present invention provides an aerial display apparatus capable of providing a depth display of an aerial image.

SOLUTION TO PROBLEM

According to a first aspect of the present invention, there is provided an aerial display apparatus comprising:

a display device configured to display an image;
an optical device configured to allow light from the display device to be transmitted therethrough, and configured of a transparent material; and
a mirror device configured to reflect light from the optical device and display an image in an aerial space on a side opposite to the optical device, wherein
the optical device includes a first optical member having a first thickness and a second optical member having a second thickness greater than the first thickness.

According to a second aspect of the present invention, there is provided the aerial display apparatus according to the first aspect, wherein
the first optical member and the second optical member have an identical refraction rate.
According to a third aspect of the present invention, there is provided an aerial display apparatus comprising:

a display device configured to display an image;
an optical device configured to allow light from the display device to be transmitted therethrough, and configured of a transparent material; and
a mirror device configured to reflect light from the optical device and display an image in an aerial space on a side opposite to the optical device, wherein
the optical device has a continuously changing thickness.

According to a fourth aspect of the present invention, there is provided an aerial display apparatus comprising:

a display device configured to display an image;
an optical device configured to allow light from the display device to be transmitted therethrough, and configured of a transparent material; and
a mirror device configured to reflect light from the optical device and display an image in an aerial space on a side opposite to the optical device, wherein

the optical device has a constant thickness and has a gradually or continuously changing refraction rate.

According to a fifth aspect of the present invention, there is provided the aerial display apparatus according to any one of the first to fourth aspects, wherein
the optical device is disposed in parallel with the display device.

According to a sixth aspect of the present invention, there is provided the aerial display apparatus according to any one of the first to fourth aspects, wherein
the mirror device is disposed so as to be inclined with respect to the display device.

According to a seventh aspect of the present invention, there is provided the aerial display apparatus according to any one of the first to fourth aspects, wherein

the mirror device includes a substrate and a plurality of optical elements, the optical elements being provided on a surface of the substrate on a side of the optical device, and
each of the optical elements is a rectangular parallelepiped, and includes first and second reflective surfaces, the first and second reflective surfaces being configured to reflect light and being in contact with each other.

According to an eighth aspect of the present invention, there is provided the aerial display apparatus according to the seventh aspect, wherein
the first reflective surface is inclined with respect to a first direction, the first direction being along one side of the display device in a horizontal plane of the mirror device.

According to a ninth aspect of the present invention, there is provided the aerial display apparatus according to any one of the first to fourth aspects, further comprising:

a lighting device configured to produce light, wherein
the display device is a liquid crystal display device, and allows light from the lighting device to be transmitted therethrough.

ADVANTAGEOUS EFFECTS OF INVENTION

According to the present invention, it is possible to provide an aerial display apparatus capable of providing a depth display of an aerial image.

BRIEF DESCRIPTION OF THE DRAWINGS

FIG. 1 is a side view of an aerial display apparatus according to a first embodiment.
FIG. 2 is a perspective view of the aerial display apparatus according to the first embodiment.
FIG. 3 is a perspective view of the lighting device, the display device, and the optical device according to the first embodiment.
FIG. 4 is a side view of the lighting device, the display device, and the optical device according to the first embodiment.
FIG. 5 is a side view and a bottom view of a mirror device according to the first embodiment.
FIG. 6 is a block diagram of the aerial display apparatus according to the first embodiment.
FIG. 7 is a schematic diagram illustrating an operation of the aerial display apparatus according to the first embodiment.
FIG. 8 is a ray trace diagram of the aerial display apparatus according to the first embodiment.
FIG. 9 is a diagram illustrating a position of image formation by an optical device 12 according to the first embodiment.
FIG. 10 is a perspective view of the aerial display apparatus according to an example.
FIG. 11 is a diagram illustrating an image of a display device according to the example.
FIG. 12 is a perspective view illustrating an aerial image according to the example.
FIG. 13 is a plane view of an optical device according to a second embodiment.
FIG. 14 is a side view of the optical device shown in FIG. 13.
FIG. 15 is a perspective view of an aerial display apparatus 1 according to a third embodiment.
FIG. 16 is a side view of a lighting device, a display device, and an optical device according to the third embodiment.
FIG. 17 is a schematic diagram illustrating an operation of the aerial display apparatus according to the third embodiment.
FIG. 18 is a plane view of a lighting device, a display device, and an optical device according to a fourth embodiment.
FIG. 19 is a side view of the lighting device, the display device, and the optical device according to the fourth embodiment.
FIG. 20 is a schematic diagram illustrating an operation of the aerial display apparatus according to the fourth embodiment.

DETAILED DESCRIPTION

Hereinafter, embodiments will be described with reference to the drawings. The drawings are schematic or conceptual, and the dimensions, ratios, and the like of each drawing are not necessarily the same as the actual ones. Portions that represent the same component in different drawings may be shown in different dimensional relationships and/or ratios. In particular, several embodiments shown below exemplify an apparatus and a method for embodying the technical idea of the present invention, and the technical idea of the present invention is not specified by the shape, structure, disposition, or the like of the components. In the following description, elements having the same function and configuration will be denoted by the same reference numerals, and redundant descriptions will be omitted.

<1> First Embodiment

<1-1> Configuration of Aerial Display Apparatus 1

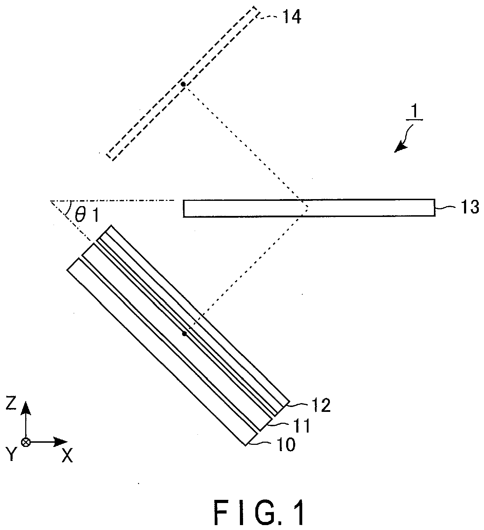

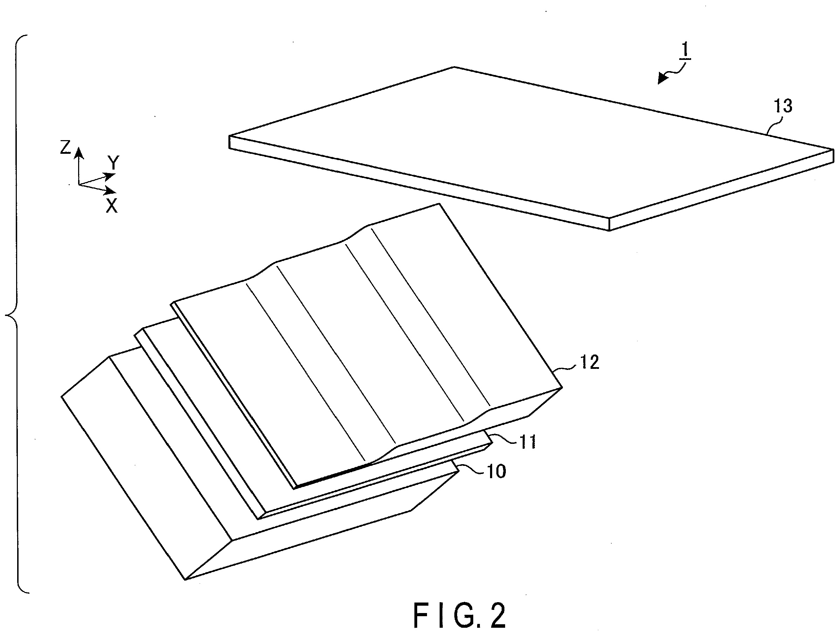

FIG. 1 is a side view of an aerial display apparatus 1 according to a first embodiment. FIG. 2 is a perspective view of the aerial display apparatus 1 according to the first embodiment.
The aerial display apparatus 1 includes a lighting device 10, a display device 11, an optical device 12, and a mirror device 13. An X direction in FIG. 1 is a direction along one side of the mirror device 13, a Y direction is a direction orthogonal to the X direction in a horizontal plane, and a Z direction is a direction (also referred to as a "normal direction") orthogonal to the XY plane. In FIG. 1, a plurality of devices constituting the aerial display apparatus 1 are shown as if they are floating; however, these devices are fixed at the illustrated positions by unillustrated support members.
The lighting device 10, the display device 11, and the optical device 12 are disposed in such a manner that their principal surfaces become parallel. The lighting device 10, the display device 11, and the optical device 12 are disposed at an angle $\Theta 1$ to the mirror device 13. The angle $\Theta 1$ is, for example, 45 degrees. The angle $\Theta 1$ is not limited to 45 degrees, and can be set within the range of equal to or greater than 30 degrees and equal to or less than 60 degrees.
The lighting device 10 produces illumination light and emits the illumination light toward the display device 11. The lighting device 10 is configured of a surface light source. The lighting device 10 is configured of, for example, a side-light type (edge-light type) backlight. The lighting device 10 includes a light source section (not illustrated) and a light guide plate (not illustrated). The light source section is disposed on a side surface of the light guide plate, and produces illumination light toward a side surface of the light guide plate. The light guide plate emits illumination light from the light source section toward the display device 11. The light source section includes, for example, a plurality of lightemitting diodes (LEDs) that emit white light.
The display device 11 is a transmissive display device. The display device 11 is configured of, for example, a liquid crystal display device. A driving mode of the display device 11 is not particularly limited, and a twisted nematic (TN) mode, a vertical alignment (VA) mode, a homogeneous mode, or the like can be used. The display device 11 receives illumination light emitted from the lighting device 10. The display device 11 allows illumination light to be transmitted therethrough, and performs light modulation. The display device 11 displays a desired image and/or a moving image on its display surface.
The optical device 12 refracts light emitted from the display device 11. The optical device 12 includes a plurality of regions (also referred to as "optical members") that differ in thickness. The optical device 12 functions in such a manner that the aerial image formation position differs among the regions. An orientation in which the optical device 12 is disposed may be freely set. A concrete configuration of the optical device 12 will be described later.
The mirror device 13 receives display light that has been transmitted through the optical device 12. The mirror device 13 reflects the display light, to thereby display an aerial image 14 in an aerial space on a side opposite to the optical device 12. The aerial image 14 is formed at a plane-symmetrical position to the display device 11 with respect to the mirror device 13. A concrete configuration of the mirror device 13 will be described later. Display light reflected by the mirror device 13 is visually recognized by a viewer who is on the opposite side of the optical device 12 of the mirror device 13.

<1-2> Concrete Configuration of Optical Device 12

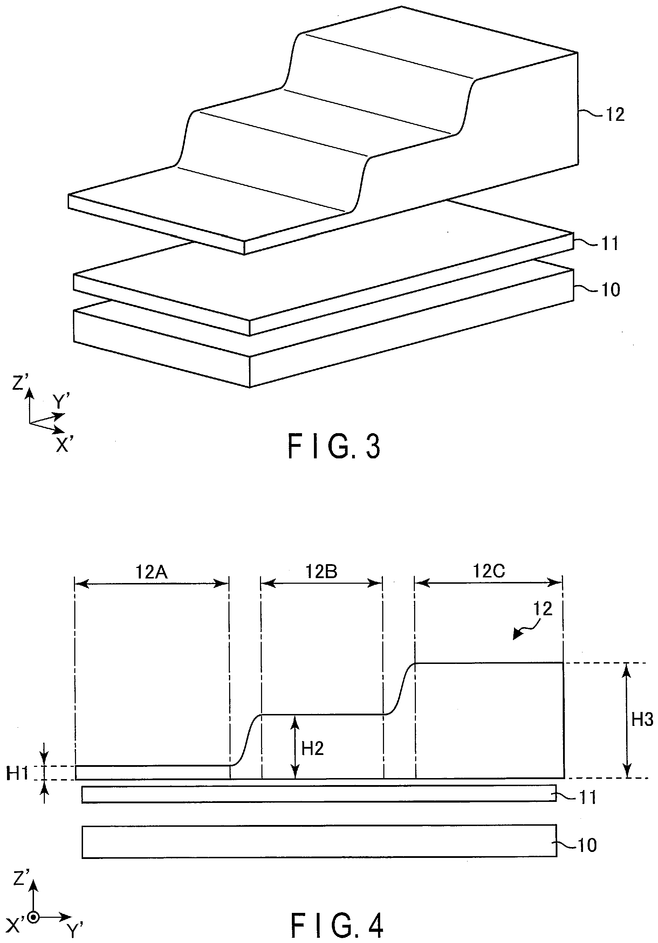

Next, a concrete configuration of the optical device 12 will be described. FIG. 3 is a perspective view of the lighting device 10, the display device 11, and the optical device 12. FIG. 4 is a side view of the lighting device 10, the display device 11, and the optical device 12.

The directions shown in FIG. 3 are directions with reference to the display device 11, with an X' direction being a direction taken along one side of the display device 11, a Y' direction being a direction orthogonal to the X' direction in the horizontal plane, and a Z' direction being a direction orthogonal to an X'Y' plane. The X' direction and the X direction form an angle $\theta 1$ (e.g., 45 degrees). The Y' direction is parallel to the Y direction. The Z' direction and the Z direction form the angle $\theta 1$.

The optical device 12 includes a first optical member 12A, a second optical member 12B, and a third optical member 12C. The optical device 12 is configured of a transparent material. The optical device 12 can be configured of (1) a resin material such as an acrylic resin and polycarbonate, or (2) a glass material such as quartz glass and soda-lime glass.

The first optical member 12A, the second optical member 12B, and the third optical member 12C extend in the X' direction, and are disposed side by side in the Y' direction. The first optical member 12A, the second optical member 12B, and the third optical member 12C differ in thickness.

The first optical member 12A has a thickness H1. The second optical member 12B has a thickness H2. The third optical member 12C has a thickness H3. In the example of FIG. 4, the relationship of "H1 < H2 < H3" is satisfied.

The optical device 12 is, for example, disposed in contact with an upper surface of the display device 11, or so as to leave a space from the display device 11. Typically, the optical device 12 is mounted on the display device 11, and is adhered to the display device 11 with a transparent adhesive material.

The display light that has been transmitted through the optical device 12 is visually recognized in such a manner that the display images have depths that differ among the regions differing in thickness.

The first optical member 12A, the second optical member 12B, and the third optical member 12C are integrally configured. The first optical member 12A, the second optical member 12B, and the third optical member 12C may be physically separated.

<1-3> Concrete Configuration of Mirror Device 13

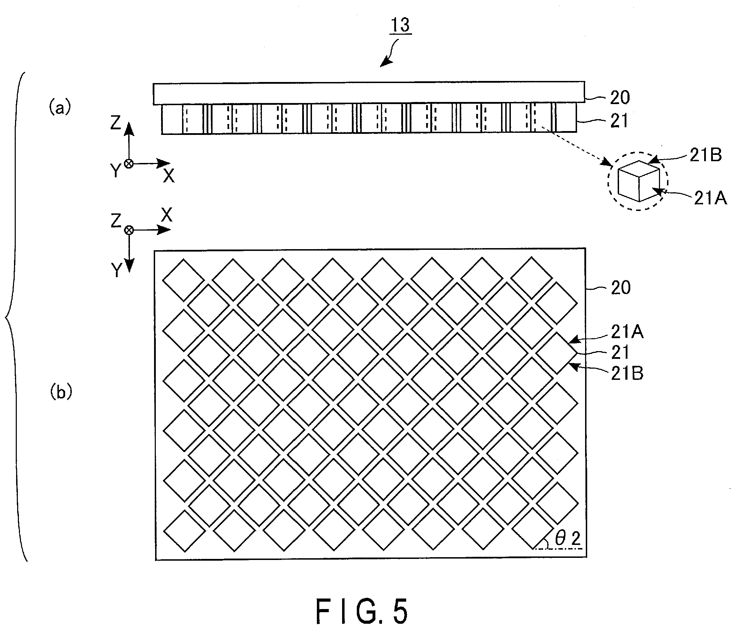

Next, a concrete configuration of a mirror device 13 will be described. FIG. 5 is a side view and a bottom view of the mirror device 13. FIG. 5(a) is a side view of the mirror device 13, and FIG. 5(b) is a bottom view of the mirror device 13.

The mirror device 13 includes a substrate 20 and a plurality of optical elements 21. FIG. 5(a) also shows a perspective view of a single optical element 21 that has been extracted. The mirror device 13 is configured of a transparent material such as an acrylic resin.

The optical elements 21 are provided on a bottom surface of the substrate 20. Each of the optical elements 21 is a rectangular parallelepiped or a cube. The planar shape of the optical element 21 is, for example, a square. The optical element 21 includes two reflective surfaces 21A and 21B. The reflective surfaces 21A and 21B correspond to two side surfaces of the rectangular parallelepiped and are in contact with each other. The reflective surfaces 21A and 21B constitute what is known as a dihedral corner reflector.

The optical element 21 is disposed with one side inclined at an angle $\theta 2$ to the X direction. The angle $\theta 2$ is, for example, 45 degrees. The angle $\theta 2$ is not limited to 45 degrees, and can be set within the range of equal to or greater than 30 degrees and equal to or less than 60 degrees. The optical elements 21 are arranged in a staggered manner. That is, the optical elements 21 are disposed in such a manner that a plurality of rows are arrayed in a direction of 45 degrees to the Y direction, with each row extending in a direction of 45 degrees to the X direction. The optical elements 21 are disposed with a gap interposed therebetween.

The light that has been transmitted through the optical device 12 is made incident on the optical element 21 from the bottom surface of the optical element 21, is reflected twice by the reflective surfaces 21A and 21B, and is then emitted from an upper surface of the optical element 21.

The mirror device 13 may be configured in such a manner that a substrate 20 is disposed on the lower side and a plurality of optical elements 21 are provided on the substrate 20.

<1-4> Block Configuration of Aerial Display Apparatus 1

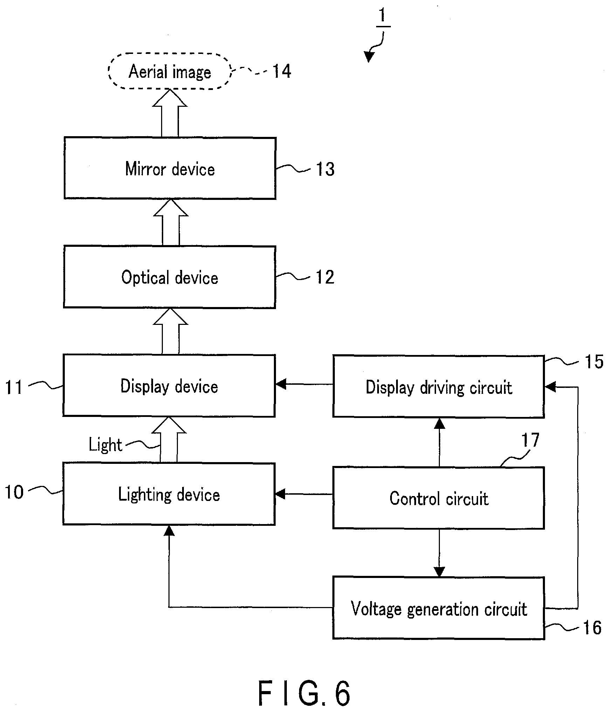

FIG. 6 is a block diagram of the aerial display apparatus 1. The aerial display apparatus 1 includes a lighting device 10, a display device 11, an optical device 12, a mirror device 13, a display driving circuit 15, a voltage generation circuit 16, and a control circuit 17. In FIG. 6, the narrow arrows represent signal lines, and the thick arrows represent the path of light (optical path).

The display driving circuit 15 supplies a signal to the display device 11, and drives the display device 11. The display driving circuit 15 causes the display device 11 to display an image and/or a moving image.

The voltage generation circuit 16 generates multiple types of voltages required for the lighting device 10 and the display driving circuit 15 to operate, and supplies these voltages to the lighting device 10 and the display driving circuit 15.

The control circuit 17 controls the operation of the entire aerial display apparatus 1. That is, the control circuit 17 controls the lighting device 10, the display driving circuit 15, and the voltage generation circuit 16. The control circuit 17 causes an aerial image 14 to be displayed at a desired display position.

<1-5> Operation

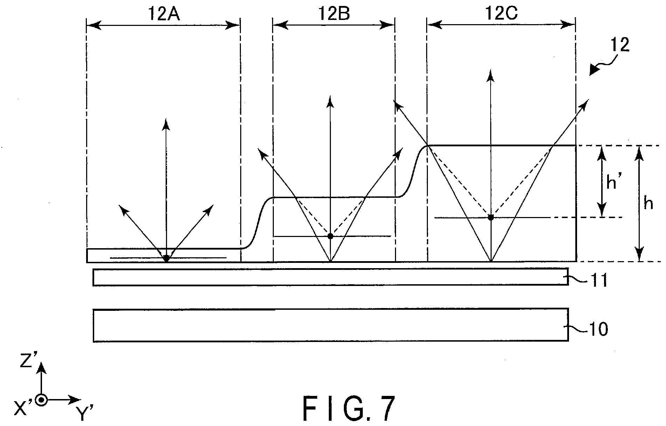

An operation of the aerial display apparatus 1 with the above-described configuration will be described. FIG. 7 is a schematic diagram illustrating an operation of the aerial display apparatus 1.

The lighting device 10 emits illumination light toward the display device 11. The display device 11 allows the illumination light emitted from the lighting device 10 to be transmitted therethrough, and displays an image and/or a moving image. The display light emitted from the display device 11 is made incident on the optical device 12.

A case is assumed where an image displayed on the display device 11 is seen via the optical device 12. In the example of FIG. 7, it is assumed that a bottom surface of the optical device 12 is in contact with an upper surface of the display device 11. Accordingly, refraction of light at the bottom surface of the optical device 12 is not taken into consideration.

The light that has been made incident on the optical device 12 is transmitted through the first optical member 12A, the second optical member 12B, and the third optical member 12C, and is refracted at the respective upper surfaces of the first optical member 12A, the second optical member 12B, and the third optical member 12C. Assuming that a display image is being displayed on the display device 11, the following formula (1) is satisfied, where h is the position of the display image from the upper surface of the third optical member 12C, h' is the position of the apparent display image from the upper surface of the third optical member 12C, and n is a refraction rate of the optical device 12.

$$h'=h/n \qquad \qquad ...(1)$$

A relationship similar to the above-described relationship regarding the third optical member 12C is satisfied for the first optical member 12A and the second optical member 12B.

When the viewer sees a display image of the display device 11 through the optical device 12, the positions of the apparent display images of the first optical member 12A, the second optical member 12B, and the third optical member 12C with reference to the viewer have a relationship of "12A > 12B > 12C". That is, the apparent image of the first optical member 12A appears relatively far away, and the apparent image of the third optical member 12C appears relatively close. The apparent image of the second optical member 12B appears between the apparent image of the first optical member 12A and the apparent image of the third optical member 12C.

It is thereby possible to make the apparent display images of the three regions, namely, the first optical member 12A, the second optical member 12B, and the third optical member 12C differ in height.

The aerial image 14 is obtained by formation of an image acquired through the optical device 12 at a plane-symmetrical position with respect to the mirror device 13. In the case where the aerial image 14 reflected by the mirror device 13 is seen by the viewer, it will be as follows. The positions of the apparent display images of the first optical member 12A, the second optical member 12B, and the third optical member 12C as seen from the viewer have a relationship of "12A < 12B < 12C". That is, the image of the first optical member 12A appears relatively close, and the image of the third optical member 12C appears relatively far away. The image of the second optical member 12B appears between the image of the first optical member 12A and the image of the third optical member 12C.

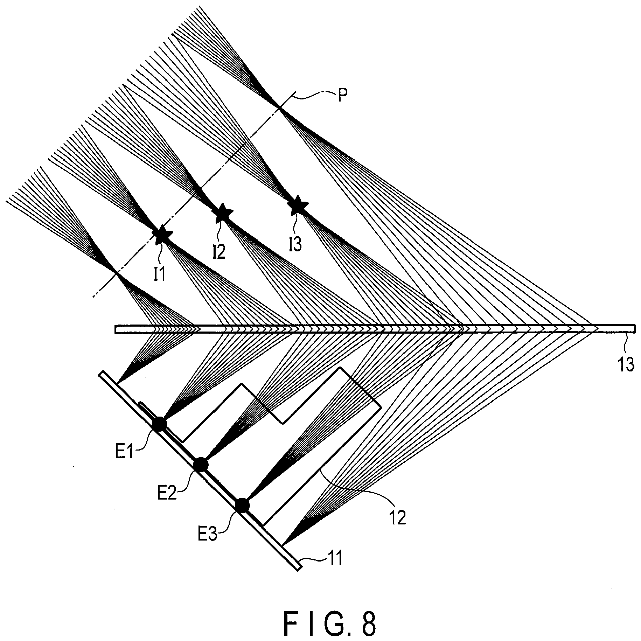

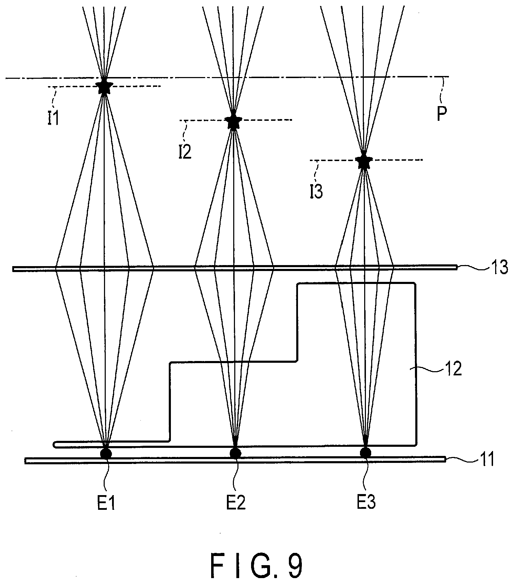

FIG. 8 is a ray trace diagram of the aerial display apparatus 1. In FIG. 8, the optical device 12 is disposed by being rotated by 90 degrees from the state of FIGS. 1 and 2, to facilitate understanding of the difference in image formation position. The "P" in FIG. 8 is a position (plane) that is plane-symmetrical to the display device 11 with respect to the mirror device 13. FIG. 9 is a diagram illustrating an image formation position by the optical device 12. In FIG. 9, the display device 11 and the mirror device 13 are drawn in parallel for the sake of convenience, to facilitate understanding of the difference in image formation position. The actual disposition of the display device 11 and the mirror device 13 is as shown in FIG. 8.

As shown in FIG. 8, the light emitted from an emission position E1 of the display device 11 is transmitted through the first optical member 12A of the optical device 12, and forms an image at an image formation position I1. The light emitted from an emission position E2 of the display device 11 is transmitted through the second optical member 12B of the optical device 12, and forms an image at an image formation position 12. The light emitted from an emission position E3 of the display device 11 is transmitted through the third optical member 12C of the optical device 12, and forms an image at an image formation position I3. The light that has not been transmitted through the optical device 12 forms an image at a position P.

The image formation positions I1, I2, and 13 are positioned so as to be increasingly distanced in this order from the position P, which is plane-symmetrical to the display device 11, toward the mirror device 13. That is, an aerial image including a plurality of images that differ in image formation position is obtained.

(Example)

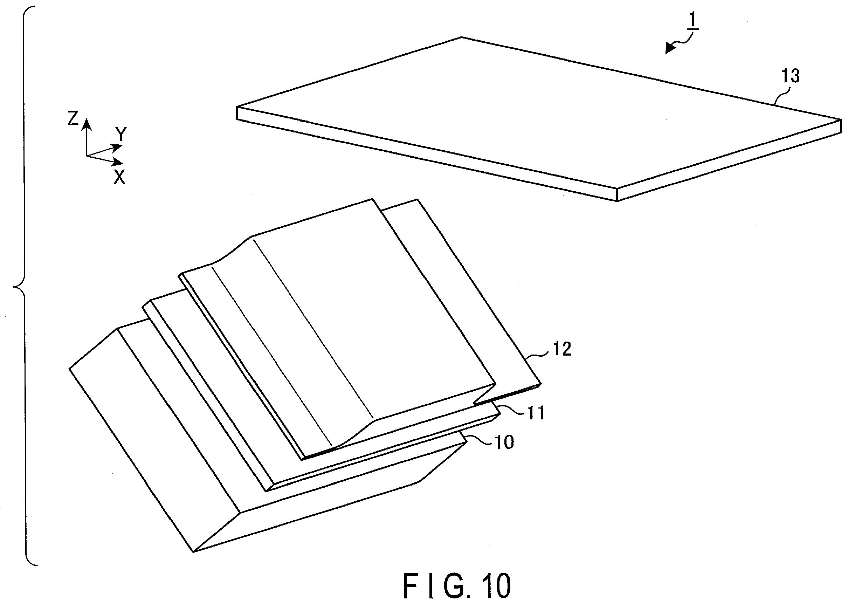

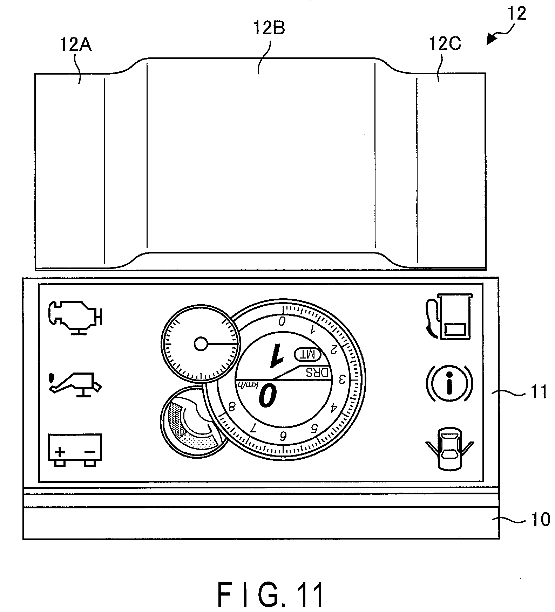

Next, an example will be described. FIG. 10 is a perspective view of an aerial display apparatus 1 according to an example. FIG. 11 is a diagram illustrating an image of a display device 11 according to the example. In FIG. 11, the optical device 12 is shown by being shifted to the upper side of the drawing. The aerial display apparatus 1 constitutes a meter panel of a vehicle.

The optical device 12 includes a first optical member 12A, a second optical member 12B, and a third optical member 12C. The second optical member 12B has a thickness greater than a thickness of the first optical member 12A. The third optical member 12C has a thickness equal to a thickness of the first optical member 12A. That is, the optical device 12 is configured to have a large thickness at a central portion and have a small thickness at peripheral portions on both sides of the central portion.

The display device 11 displays information to be displayed on the meter panel. That is, the display device 11 displays main information (including a speed meter, a tachometer, etc.) and warning information (including a lowfuel warning lamp, an oil-pressure warning lamp, a battery warning lamp, etc.).

The display light emitted from the display device 11 is transmitted through the optical device 12. The display light that has been transmitted through the optical device 12 is reflected by the mirror device 13, and is formed into an aerial image in an aerial space on a side opposite to the display device 11 with respect to the mirror device 13.

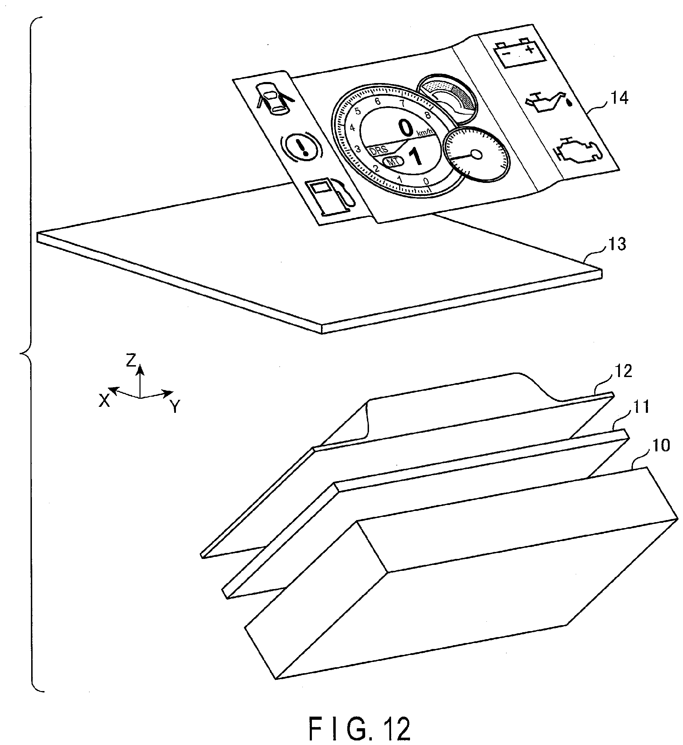

FIG. 12 is a perspective view illustrating an aerial image 14 according to the example. When the display device 11 is seen through the optical device 12, the central portion (a speed meter and a tachometer) of the display device 11 appears relatively at the front, and the both end portions (warning lamps) of the display device 11 appear relatively at the back. The aerial image 14 is obtained by formation of an image acquired through the optical device 12 at a plane-symmetrical position with respect to the mirror device 13. Accordingly, the aerial image 14 is visually recognized by the viewer in such a manner that the central portion is displayed relatively at the back and the both end portions are displayed relatively at the front.

In normal circumstances, it is the main information (a speed meter and a tachometer) that is displayed; however, in the event of a fault, warning information can be displayed at an end portion so as to relatively pop out. It is thereby possible to promote awareness of the importance of the warning.

<1-6> Effects of First Embodiment

According to the first embodiment, the aerial display apparatus 1 includes a display device 11 that displays an image, an optical device 12 that reflects light from the display device 11 and is configured of a transparent material, and a mirror device 13 that reflects light from the optical device 12 and causes an image to be displayed in an aerial space on a side opposite to the optical device 12, as described above. The optical device 12 includes a first optical member 12A having a first thickness H1, and a second optical member 12B having a second thickness H2 greater than the first thickness H1. The image emitted from the display device 11 is reflected by the mirror device 13, and is formed into an aerial image in an aerial space on a side opposite to the display device 11 with respect to the mirror device 13.

According to the first embodiment, it is thus possible to achieve an aerial display apparatus capable of providing a depth display of an aerial image.

<2> Second Embodiment

In a second embodiment, an optical device 12 includes a lens that refracts light to thereby adjust the image formation position of an aerial image.

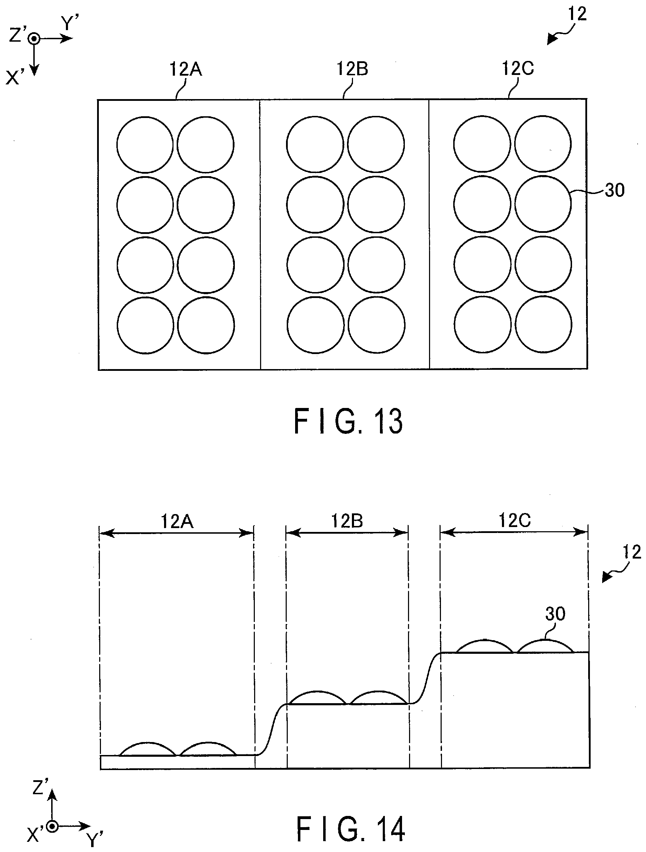

FIG. 13 is a plane view of the optical device 12 according to the second embodiment. FIG. 14 is a side view of the optical device 12 shown in FIG. 13.

The optical device 12 further includes a plurality of lenses 30. A plurality of lenses 30 are provided on each of the first optical member 12A, the second optical member 12B, and the third optical member 12C included in the optical device 12. The lens 30 is configured of a planoconvex lens. The size, the number, and the focal length of the lens 30 can be freely set.

Configurations other than the optical device 12 are the same as those of the first embodiment. The display light that has been transmitted through the optical device 12 is refracted by the lens 30. According to the second embodiment, it is possible to adjust the image formation position of an aerial image while achieving depth display of the aerial image.

The lens 30 is not limited to a plano-concave lens, and other types of lenses may be used.

<3> Third Embodiment

In a third embodiment, an optical device 12 is configured with a continuously increasing thickness. In the third embodiment, an aerial image is displayed with a continuously increasing depth with respect to the original position in which the optical device 12 is not provided.

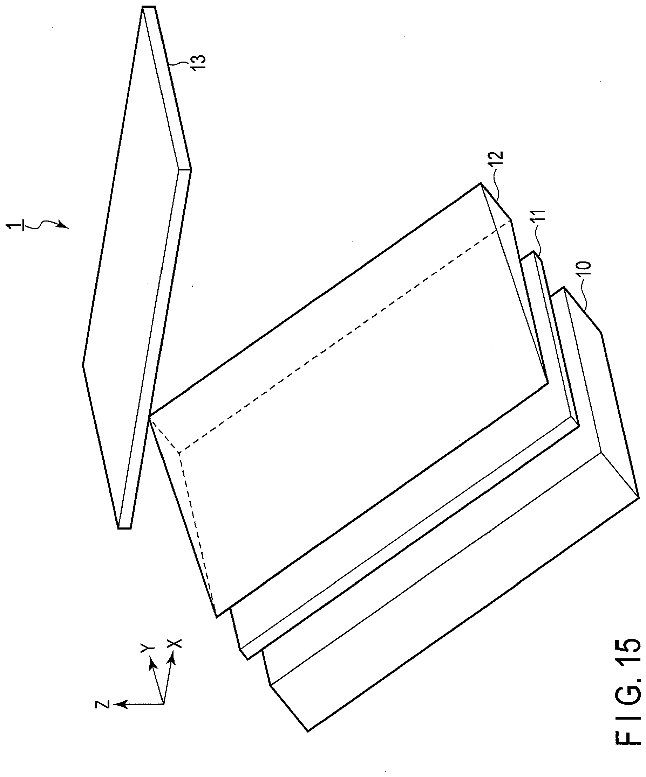

FIG. 15 is a perspective view of an aerial display apparatus 1 according to the third embodiment. A lighting device 10, a display device 11, and an optical device 12 are disposed in such a manner that their principal surfaces become parallel. The lighting device 10, the display device 11, and the optical device 12 are disposed at an angle θ1 to a mirror device 13.

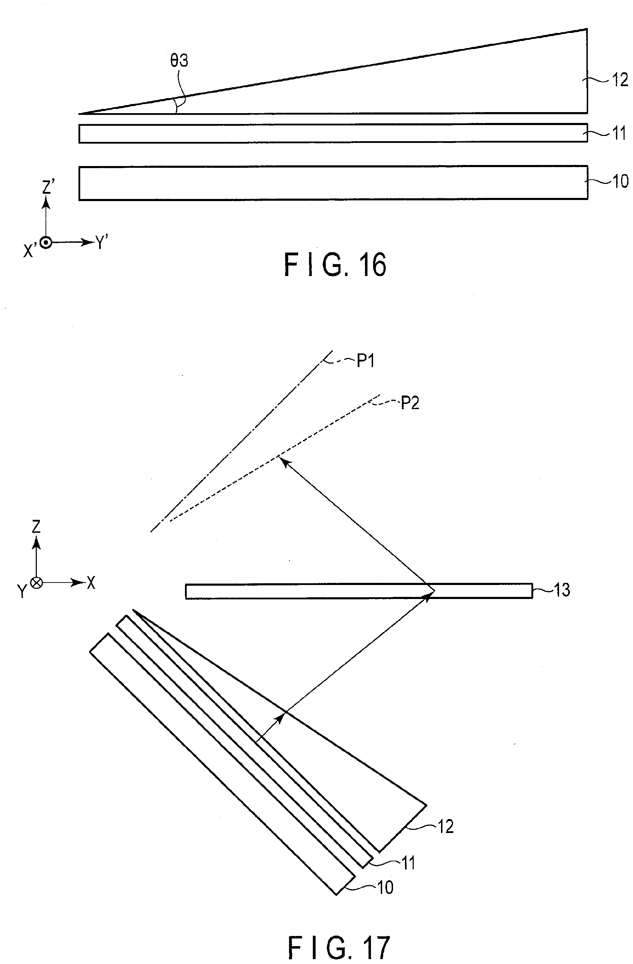

FIG. 16 is a side view of the lighting device 10, the display device 11, and the optical device 12. A bottom surface of the optical device 12 is parallel to the display device 11. The optical device 12 has a continuously changing thickness that increases toward the Y' direction. The optical device 12 is configured of a pentahedron with an upper surface inclined with respect to a bottom surface. That is, the optical device 12 has a structure in which a triangular prism is laid down. A side surface of the optical device 12 is in the shape of a triangle or a rightangled triangle. A bottom surface and an upper surface of the optical device 12 have an angle θ3. The angle θ3 is suitably set based on the position of the aerial image and the dimensions of the aerial display apparatus 1.

The side surfaces of the optical device 12 may be quadrilateral (including trapezoidal), as long as the upper surface is inclined with respect to the bottom surface. In this example, the optical device 12 is configured of a hexahedron with an upper surface inclined with respect to a bottom surface, and has a structure in which a quadrangular prism is laid down.

The material of the optical device 12 is the same as that of the first embodiment.

FIG. 17 is a schematic diagram illustrating an operation of the aerial display apparatus 1. In FIG. 17, the optical device 12 is disposed by being rotated by 90 degrees from the state of FIG. 15, to facilitate understanding of the difference in image formation position. The lighting device 10 emits illumination light toward the display device 11. The display device 11 allows the illumination light emitted from the lighting device 10 to be transmitted therethrough, and displays an image and/or a moving image. The display light emitted from the display device 11 is made incident on the optical device 12. Light is uniformly refracted on the bottom surface of the optical device 12, which, however, is not taken into consideration for the sake of simplicity.

Light that has been made incident on the optical device 12 is refracted on the upper surface of the optical device 12. In FIG. 17, a plane P1 is a plane that is plane-symmetrical to the display device 11 with respect to the mirror device 13. In the absence of the optical device 12, an aerial image is formed in the plane P1. Light that has been refracted by the optical device 12 forms an image in a plane P2 closer to the mirror device 13 than the plane P1. That is, an aerial image is formed at a position in the plane P2. An aerial image formed in the plane P2 is displayed so as to continuously increase in depth with respect to the plane P1.

According to the third embodiment, it is possible to achieve an aerial display apparatus capable of displaying an aerial image that continuously increases in depth.

<4> Fourth Embodiment

In a fourth embodiment, a plurality of optical members configuring an optical device 12 have a constant thickness, but vary in refraction rate.

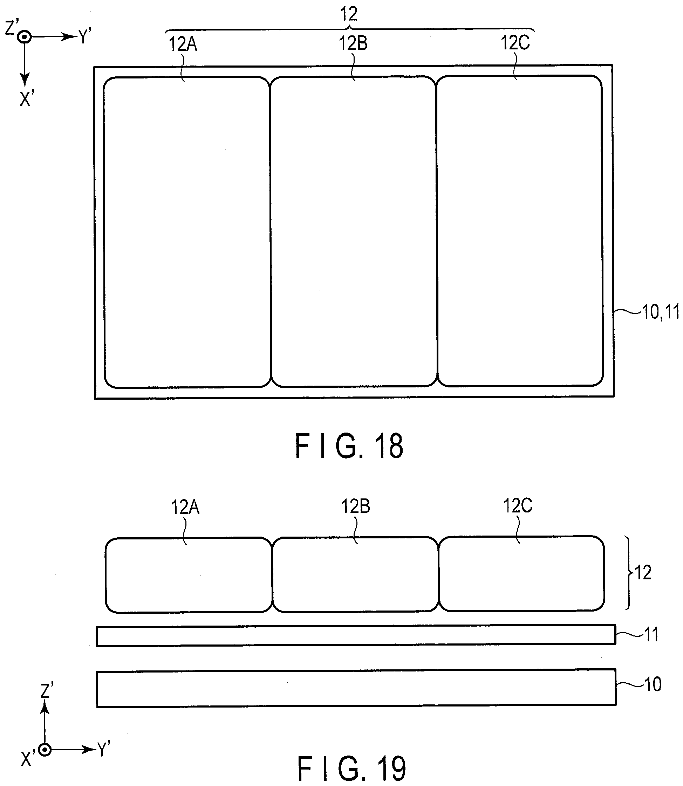

FIG. 18 is a plane view of a lighting device 10, a display device 11, and an optical device 12 according to the fourth embodiment. FIG. 19 is a side view of the lighting device 10, the display device 11, and the optical device 12. The lighting device 10, the display device 11, and the optical device 12 are disposed in such a manner that their principal surfaces become parallel. The lighting device 10, the display device 11, and the optical device 12 are disposed at an angle Θ1 to a mirror device 13, similarly to the first embodiment.

The optical device 12 includes a first optical member 12A, a second optical member 12B, and a third optical member 12C. The first optical member 12A, the second optical member 12B, and the third optical member 12C are configured of a transparent material. The first optical member 12A, the second optical member 12B, and the third optical member 12C are identical in thickness, and are respectively configured of materials that differ in refraction rate. In other words, the optical device 12 has a constant thickness and is configured to gradually change in refraction rate.

The refraction rates of the first optical member 12A, the second optical member 12B, and the third optical member 12C are respectively referred to as "n1", "n2", and "n3". For example, the relationship of "n1 < n2 < n3" is satisfied. The materials of the first optical member 12A, the second optical member 12B, and the third optical member 12C are selected to satisfy the relationship of "n1 < n2 < n3". The first optical member 12A, the second optical member 12B, and the third optical member 12C may be configured by injecting impurities into a transparent member in such a manner that the refraction rate is adjusted by varying the amount of the impurities.

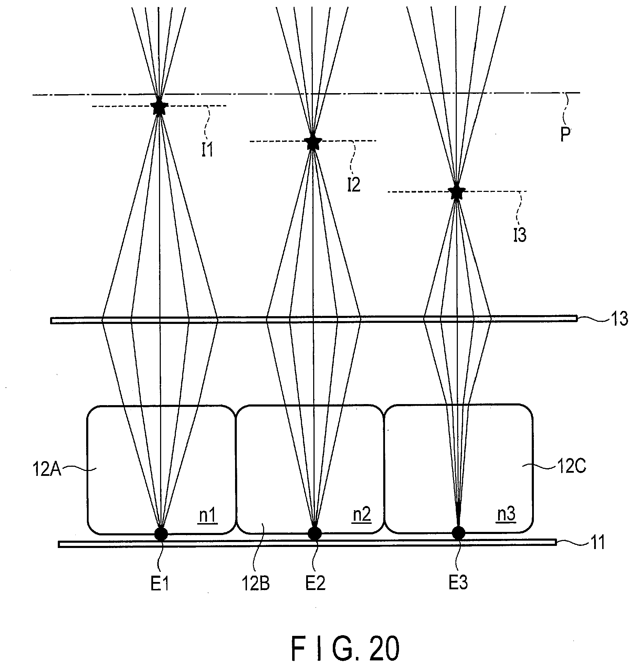

FIG. 20 is a schematic diagram illustrating an operation of the aerial display apparatus 1. In FIG. 20, the display device 11 and the mirror device 13 are drawn in parallel for the sake of convenience, to facilitate understanding of the difference in image formation position. The actual disposition of the display device 11 and the mirror device 13 is as shown in FIG. 1. The "P" in FIG. 20 is a position (plane) that is plane-symmetrical to the display device 11 with respect to the mirror device 13.

As shown in FIG. 20, the light emitted from an emission position E1 of the display device 11 is transmitted through the first optical member 12A of the optical device 12, and forms an image at an image formation position I1. The light emitted from an emission position E2 of the display device 11 is transmitted through the second optical member 12B of the optical device 12, and forms an image at an image formation position I2. The light emitted from an emission position E3 of the display device 11 is transmitted through the third optical member 12C of the optical device 12, and forms an image at an image formation position I3. The light that has not been transmitted through the optical device 12 forms an image at a position P.

The image formation positions I1, I2, and I3 are positioned so as to be increasingly distanced in this order from the position P, which is plane-symmetrical to the display device 11, toward the mirror device 13. That is, an aerial image including a plurality of images that differ in image formation position is obtained.

According to the fourth embodiment, it is possible to achieve an aerial display apparatus capable of providing a depth display of an aerial image.

As a modification of the fourth embodiment, the optical device 12 may have a constant thickness and be configured to continuously change in refraction rate.

<5> Other Examples

In the above-described embodiments, a configuration has been exemplified in which the optical device 12 includes three optical members (the first optical member 12A, the second optical member 12B, and the third optical member 12C) that differ in thickness. However, the configuration is not limited thereto, and the number of optical members included in the optical device 12 may be any plural number other than three.

In each of the above-described embodiments, a liquid crystal display device has been described as an example of a display device; however, any display device other than a liquid crystal display device, such as an organic electroluminescent (EL) display device, which is selfluminous, may also be used.

The present invention is not limited to the above-described embodiments, and can be modified in various manners in practice, without departing from the gist of the invention. Moreover, the embodiments can be suitably combined; in that case, combined advantages are obtained. Furthermore, the above-described embodiments include various inventions, and various inventions can be extracted by a combination selected from structural elements disclosed herein. For example, if the problem can be solved and the effects can be attained even after some of the structural elements are deleted from all the structural elements disclosed in the embodiment, the structure made up of the resultant structural elements may be extracted as an invention.

**Claims**

1. An aerial display apparatus comprising:

   a display device configured to display an image;
   an optical device configured to allow light from the display device to be transmitted therethrough, and configured of a transparent material; and
   a mirror device configured to reflect light from the optical device and display an image in an aerial space on a side opposite to the optical device, wherein
   the optical device includes a first optical member having a first thickness and a second optical member having a second thickness greater than the first thickness.

2. The aerial display apparatus according to claim 1, wherein
   the first optical member and the second optical member have an identical refraction rate.

3. An aerial display apparatus comprising:

   a display device configured to display an image;
   an optical device configured to allow light from the display device to be transmitted therethrough, and configured of a transparent material; and
   a mirror device configured to reflect light from the optical device and display an image in an aerial space on a side opposite to the optical device, wherein
the optical device has a continuously changing thickness.

4. An aerial display apparatus comprising:

   a display device configured to display an image;
   an optical device configured to allow light from the display device to be transmitted therethrough, and configured of a transparent material; and
   a mirror device configured to reflect light from the optical device and display an image in an aerial space on a side opposite to the optical device, wherein
   the optical device has a constant thickness and has a gradually or continuously changing refraction rate.

5. The aerial display apparatus according to any one of claims 1 to 4, wherein
   the optical device is disposed in parallel with the display device.

6. The aerial display apparatus according to any one of claims 1 to 4, wherein
   the mirror device is disposed so as to be inclined with respect to the display device.

7. The aerial display apparatus according to any one of claims 1 to 4, wherein

   the mirror device includes a substrate and a plurality of optical elements, the optical elements being provided on a surface of the substrate on a side of the optical device, and
   each of the optical elements is a rectangular parallelepiped, and includes first and second reflective surfaces, the first and second reflective surfaces being configured to reflect light and being in contact with each other.

8. The aerial display apparatus according to claim 7, wherein
   the first reflective surface is inclined with respect to a first direction, the first direction being along one side of the display device in a horizontal plane of the mirror device.

9. The aerial display apparatus according to any one of claims 1 to 4, further comprising:

   a lighting device configured to produce light, wherein
   the display device is a liquid crystal display device, and allows light from the lighting device to be transmitted therethrough.

F I G. 1

FIG. 2

FIG. 3

FIG. 4

FIG.5

1

Aerial image ⌇‑‑14

Mirror device ⌇‑13

Optical device ⌇‑12

11⌇ Display device

Display driving circuit ⌇‑15

Light⌇

10⌇ Lighting device

17
Control circuit

Voltage generation circuit ⌇‑16

# FIG.6

FIG. 7

F I G. 8

F I G. 9

F I G. 10

EP 4 206 794 A1

F I G. 11

FIG. 12

Z' ⊙ → Y'

X' ↓

12A     12B     12C

12

30

# F I G. 13

12A     12B     12C

12

30

Z' ↑

X' ⊙ → Y'

# F I G. 14

EP 4 206 794 A1

F I G. 15

θ3

12

11

10

Z'

X'⊙ →Y'

# FIG. 16

P1

P2

Z

Y⊗ →X

13

12

11

10

# FIG. 17

F I G. 18

F I G. 19

F I G. 20

<table>
<tr><td colspan="2"><b>INTERNATIONAL SEARCH REPORT</b></td><td>International application No.<br><br>**PCT/JP2021/030618**</td></tr>
</table>

**A.    CLASSIFICATION OF SUBJECT MATTER**

*G02B 30/56*(2020.01)i; *H04N 13/302*(2018.01)i
FI:   G02B30/56; H04N13/302

According to International Patent Classification (IPC) or to both national classification and IPC

**B.    FIELDS SEARCHED**

Minimum documentation searched (classification system followed by classification symbols)

G02B30/56; H04N13/302

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)


**C.    DOCUMENTS CONSIDERED TO BE RELEVANT**

| Category* | Citation of document, with indication, where appropriate, of the relevant passages | Relevant to claim No. |
|---|---|---|
| X | WO 2011/052588 A1 (SHARP KABUSHIKI KAISHA) 05 May 2011 (2011-05-05) paragraphs [0025]-[0027], [0029]-[0031], [0048]-[0053], fig. 2-3 | 1-3, 6-9 |
| Y | | 7-8 |
| X | US 2018/0039090 A1 (INNOLUX CORPORATION) 08 February 2018 (2018-02-08) paragraphs [0026], [0030]-[0031], [0052]-[0091], fig. 2, 9-16 | 1, 5-9 |
| Y | | 7-8 |
| X | JP 2018-105966 A (SONY CORP) 05 July 2018 (2018-07-05) paragraphs [0033], [0134]-[0136], fig. 16 | 3, 5-6, 9 |
| Y | | 4, 7-8 |
| Y | JP 2006-302178 A (FUJI XEROX CO LTD) 02 November 2006 (2006-11-02) paragraph [0029], fig. 2 | 4 |

☐ Further documents are listed in the continuation of Box C.    ☑ See patent family annex.

| | |
|---|---|
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search<br><br>**12 October 2021** | Date of mailing of the international search report<br><br>**26 October 2021** |
|---|---|
| Name and mailing address of the ISA/JP<br><br>**Japan Patent Office (ISA/JP)**<br>**3-4-3 Kasumigaseki, Chiyoda-ku, Tokyo 100-8915**<br>**Japan** | Authorized officer<br><br><br><br>Telephone No. |

Form PCT/ISA/210 (second sheet) (January 2015)

## INTERNATIONAL SEARCH REPORT
### Information on patent family members

| International application No. |
| --- |
| **PCT/JP2021/030618** |

| Patent document cited in search report | | | Publication date (day/month/year) | Patent family member(s) | | | Publication date (day/month/year) |
| --- | --- | --- | --- | --- | --- | --- | --- |
| WO | 2011/052588 | A1 | 05 May 2011 | US | 2012/0268640 | A1 | |
| | | | | paragraphs [0030]-[0032], [0034]-[0036], [0054]-[0059], fig. 2-3 | | | |
| | | | | KR | 10-2012-0071406 | A | |
| | | | | CN | 102597857 | A | |
| US | 2018/0039090 | A1 | 08 February 2018 | CN | 107703638 | A | |
| JP | 2018-105966 | A | 05 July 2018 | US | 2020/0183183 | A1 | |
| | | | | paragraphs [0079], [0183]-[0185], fig. 16 | | | |
| | | | | CN | 110062905 | A | |
| | | | | WO | 2018/123686 | A1 | |
| JP | 2006-302178 | A | 02 November 2006 | (Family: none) | | | |

Form PCT/ISA/210 (patent family annex) (January 2015)

**EP 4 206 794 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017067933 A